# EUROPEAN PATENT SPECIFICATION

(11) **EP 3 650 671 B1**
(45) Date of publication and mention of the grant of the patent: **31.03.2021**
(21) Application number: 18829103.3
(22) Date of filing: 05.07.2018
(51) Int. Cl.: F02B 31/04, F02F 1/42, F02M 35/10, F02M 35/108, F02M 69/04

(54) **INTERNAL COMBUSTION ENGINE INTAKE STRUCTURE**
VERBRENNUNGSMOTORANSAUGSTRUKTUR
STRUCTURE D'ADMISSION DE MOTEUR À COMBUSTION INTERNE

(30) Priority: 05.07.2017 JP 2017132202
(43) Date of publication of application: 13.05.2020
(73) Proprietor: Honda Motor Co., Ltd., Tokyo 107-8556 (JP)
(72) Inventor: NAKAMURA, Yohei, Wako-shi Saitama 351-0193 (JP); FUJIKUBO, Makoto, Wako-shi Saitama 351-0193 (JP)
(74) Representative: Kiwit, Benedikt
(86) International application number: PCT/JP2018/025450
(87) International publication number: WO 2019/009348

(56) References cited:
- EP-A1- 3 428 433
- DE-A1-102016 004 600
- DE-C- 464 617
- JP-A- H0 988 616
- JP-A- 2002 501 829
- JP-A- 2005 120 995
- JP-A- 2007 182 832
- JP-A- 2014 070 569
- US-A- 5 937 815

## Description

### Technical Field

The present invention relates to an intake structure of an internal combustion engine (internal combustion engine intake structure) for supplying intake air to a combustion chamber.

### Background Art

In a cylinder head of an internal combustion engine, a metal partitioning portion may be provided in an intake passage to divide the intake passage into a plurality of intake passages, that is, a main flow path and a tumble flow path. In this case, since fluidity increases due to generation of a vertical vortex (so-called tumble) in the intake air introduced to a combustion chamber, fast combustion occurs and fuel economy effects can be obtained. For example, Japanese Laid-Open Patent Publication No. 2016-183639 discloses a partitioning portion that is formed integrally with the cylinder head by casting and extends linearly US5937815 discloses another intake structure of an internal combustion engine.

### Summary of Invention

To generate a tumble vortex flow in the combustion chamber when the throttle valve is slightly open (when the internal combustion engine is lightly loaded), the intake air from the tumble flow path is preferably guided to a portion between the back surface of an umbrella portion of the intake valve close to the exhaust valve and the ceiling surface of the combustion chamber. To achieve this, directing the exit (downstream end) of the tumble flow path to the ceiling surface of the combustion chamber and positioning the downstream side end portion of the tumble flow path on the downstream side of the main flow path can be considered.

When the throttle valve is fully open (when the internal combustion engine is heavily loaded), the intake air passes through both the main flow path and the tumble flow path. In the above-described structure in which the downstream side end portion of the tumble flow path is positioned on the downstream side of the main flow path, the intake air having passed through the tumble flow path collides, on the downstream side of the end point of the partitioning portion, with the intake air having passed through the main flow path. Therefore, it is difficult to generate a tumble vortex flow in the combustion chamber when the internal combustion engine is heavily loaded.

A main object of the present invention is to provide an intake structure of an internal combustion engine capable of enhancing a tumble vortex flow when the throttle valve is slightly open (when the internal combustion engine is lightly loaded) and ensuring the amount of intake air passing through the main flow path and the tumble flow path when the internal combustion engine is heavily loaded at the same time.

According to an embodiment of the present invention, there is provided an intake structure of an internal combustion engine (30) in which a partitioning portion (81) is provided in an intake passage (80) along an intake air flow direction (F) and the intake passage (80) is divided into a tumble flow path (80A) and a main flow path (80B) by the partitioning portion (81), wherein a downstream end (80Ab) of the tumble flow path (80A) is directed to a ceiling surface (32a) of a combustion chamber (36), and a guide portion (100 or 102) is provided, the guide portion (100 or 102) extending from a center of a downstream side end portion (81b) of the partitioning portion (81) toward an outside of the intake passage (80) in a width direction and having a front end positioned on a downstream side of the downstream side end portion (81b) of the partitioning portion (81) in the intake air flow direction (F).

As described above, according to the present invention, the guide portion is provided so as to meet the positional relationship described above. Therefore, when the internal combustion engine is heavily loaded, the intake air having passed through the main flow path is guided to the vicinity of the combustion chamber by the guide portion. That is, the intake air having passed through the main flow path can be swiftly guided to the combustion chamber in the state in which the intake air has an inertial force. This can prevent the intake air having passed through the main flow path from colliding with the intake air having passed through the tumble flow path on the downstream side of the end point of the partitioning portion as much as possible. In addition, since the downstream end of the tumble flow path is directed to the ceiling surface of the combustion chamber when the throttle valve is slightly open (when the internal combustion engine is lightly loaded), the intake air can easily reach the ceiling surface of the combustion chamber.

That is, it is possible to enhance a tumble vortex flow when the throttle valve is slightly open (when the internal combustion engine is lightly loaded) and ensure the amount of intake air passing through the main flow path and the tumble flow path when the internal combustion engine is heavily loaded at the same time.

The guide portion (100 or 102) may be provided in the downstream side end portion (81b) of the partitioning portion (81) so that the guide portion (100 or 102) gradually extends from the center of the downstream side end portion (81b) of the partitioning portion (81) toward the outside of the intake passage (80) as approaching the downstream side in plan view passing through a central axis line (CL) of the intake passage (80) .

Even when the guide portion extends to the tumble flow path as described above, since the guide portion gradually extends toward the outside of the intake passage as approaching the downstream side, interference with the intake air having passed through the tumble flow path by the guide portion can be easily suppressed. That is, it is possible to more easily suppress a collision between the intake air having passed through the main flow path and the intake air having passed through the tumble flow path, on the downstream side of the end point of the partitioning portion.

In addition, the downstream end (80Ab) of the tumble flow path (80A) is preferably positioned on the downstream side of the downstream side end portion (81b) of the partitioning portion (81) in the intake air flow direction (F) and the guide portion (100 or 102) is preferably provided on an upstream side of the downstream end (80Ab) of the tumble flow path (80A) in the intake air flow direction (F).

Interference with the intake air having passed through the tumble flow path by the guide portion can also be easily suppressed by achieving the positional relationship described above. That is, this structure also contributes to suppression of a collision between the intake air having passed through the main flow path and the intake air having passed through the tumble flow path, on the downstream side of the end point of the partitioning portion.

In addition, a cross-sectional area of the main flow path (80B) is preferably set to be larger than a cross-sectional area of the tumble flow path (80A) and a fuel injection valve (87) is preferably disposed close to the main flow path (80B).

By disposing the fuel injection valve in the main flow path having a larger cross-sectional area (air intake area), the separation distance between the fuel injection valve and the partitioning portion can be made larger. Accordingly, the fuel injected from the fuel injection valve can be prevented from being blocked by the partitioning portion and the fuel is supplied to the combustion chamber. In this case, although the air intake area of the main flow path is partially closed by the fuel injection valve and the air intake area is reduced, the reduction area is slight because the air intake area of the main flow path is made larger than that of the tumble flow path. Accordingly, there is also an advantage in that the intake air of the flow rate needed when the internal combustion engine is heavily loaded can be supplied to the combustion chamber.

According to the present invention, since the guide portion is provided so as to meet a predetermined positional relationship, when the internal combustion engine is heavily loaded, the intake air having passed through the main flow path is guided to the vicinity of the combustion chamber by the guide portion. Meanwhile, since the downstream end of the tumble flow path is directed to the ceiling surface of the combustion chamber, the intake air having passed through the tumble flow path easily reaches the ceiling surface of the combustion chamber.

This suppresses occurrence of a collision between the intake air having passed through the main flow path and the intake air having passed through the tumble flow path, on the downstream side of the end point of the partitioning portion. Accordingly, it is possible to enhance a tumble vortex flow when the throttle valve is slightly open (when the internal combustion engine is lightly loaded) and ensure the amount of intake air passing through the main flow path and the tumble flow path when the internal combustion engine is heavily loaded at the same time.

### Brief Description of Drawings

FIG. 1 is a schematic cross-sectional view illustrating a main part of a power unit including an internal combustion engine provided with an intake structure according to an embodiment of the present invention;
FIG. 2 is an enlarged view of the main part of FIG. 1;
FIG. 3 is a schematic view illustrating a cross section of an intake passage illustrated in FIG. 1 visually recognized when taken along a direction intersecting the longitudinal direction of the intake passage;
FIG. 4 illustrates details of a part of FIG. 2;
FIG. 5 is an enlarged perspective cross-sectional view along the longitudinal direction illustrating a main part of the vicinity of a downstream end of the intake passage provided with a guide portion;
FIG. 6 is a cross-sectional side view along the longitudinal direction illustrating the main part of the vicinity of the downstream end of the intake passage illustrated in FIG. 5;
FIG. 7 is a cross-sectional plan view along the longitudinal direction illustrating the main part of the vicinity of the downstream end of the intake passage illustrated in FIGS. 5 and 6;
FIG. 8 is a perspective cross-sectional view along the longitudinal direction illustrating the main part of the vicinity of the downstream end of the intake passage provided with a guide portion having another shape;
FIG. 9 is a cross-sectional side view along the longitudinal direction illustrating the main part of the vicinity of the downstream end of the intake passage illustrated in FIG. 8; and
FIG. 10 is a cross-sectional plan view along the longitudinal direction illustrating the main part of the vicinity of the downstream end of the intake passage illustrated in FIGS. 8 and 9.

### Description of Embodiments

A preferred embodiment of an intake structure of an internal combustion engine according to the present invention will be described in detail below with reference to the attached drawings. Unless otherwise specified, the front and the rear, the left and the right, and the upper and the lower described below indicate those when a user sits on a driver's seat of a vehicle in which a power unit is installed. In the embodiment, the vehicle is a small vehicle and specifically a motorcycle. In addition, "FR" in the drawings represents the front and "UP" represents the upper.

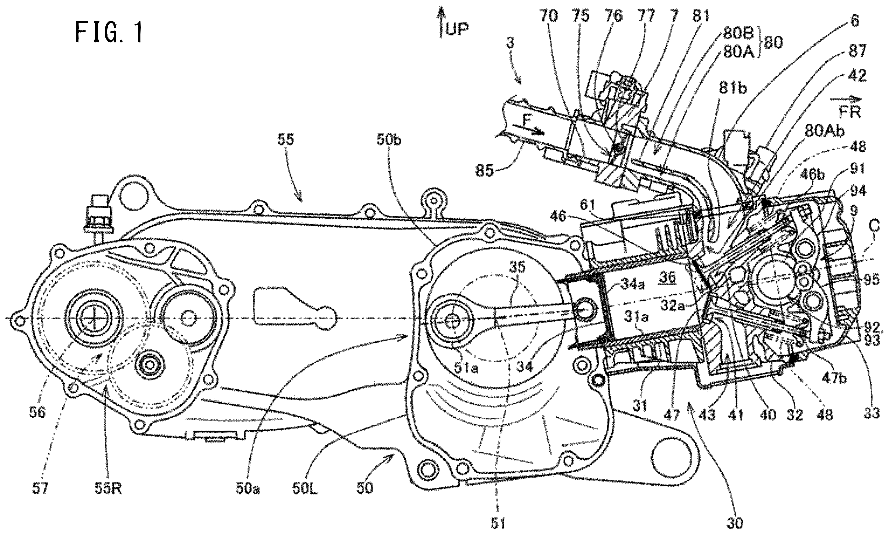

FIG. 1 is a schematic cross-sectional view illustrating a main part of a power unit 3. This power unit 3 includes, in the front portion thereof, a single-cylinder four-stroke cycle air-cooled internal combustion engine (also simply referred to below as an "internal combustion engine") 30 provided with the intake structure according to the embodiment.

In the power unit 3, a cylinder block 31, a cylinder head 32, and a cylinder head cover 33 that are inclined forward greatly so as to lie substantially horizontally and configure the internal combustion engine 30 are sequentially superimposed and fastened in the front portion of a power unit case 50 constituting a crank case unit 50a. FIG. 1 illustrates the cross sections of the left half portions of the cylinder block 31, the cylinder head 32, and the cylinder head cover 33 and illustrates a case left half 50L of the power unit case 50 with a mating surface 50b that mates with a case right half (not illustrated) facing the viewer.

That is, the power unit case 50 is configured by combining the case left half 50L with the case right half, and the case right half forms the right half of the crank case unit 50a. In addition, the front portion of the case left half 50L forms the left half of the crank case unit 50a and the rear portion thereof forms a power transmission case unit 55 that extends in a front-rear direction between a crankshaft 51 and a rear axle shaft 56 and accommodates a long belt-type continuously variable transmission (not illustrated) and a power transmission device including a reduction gear mechanism 57 and the like.

As described above, in the power unit case 50, the power transmission case unit 55 having the belt-type continuously variable transmission and the like integrally extends from the crank case unit 50a to the rear on the left side. The rear axle shaft 56, which is the output shaft of the power unit 3, is provided in the rear portion of the power transmission case unit 55. Rear wheels (not illustrated) are attached to the rear axle shaft 56.

In the upper portion of the power unit 3, an inlet pipe 6 extends from the upper portion of the cylinder head 32, which is inclined forward greatly, of the internal combustion engine 30 and the inlet pipe 6 is curved toward the rear. In addition, a throttle body 7 connected to the inlet pipe 6 is positioned above the cylinder block 31 and an air cleaner device 86 connected to the throttle body 7 via a connecting tube 85 is disposed above the power transmission case unit 55.

In contrast, an exhaust pipe 38 extends downward from the lower portion of the cylinder head 32. The exhaust pipe 38 is bent toward the rear, comes close to the right side, further extends to the rear, and is connected to a muffler (not illustrated).

The reduction gear mechanism 57 between the crankshaft 51 and the rear axle shaft 56 is accommodated in a right-side open surface 55R in the rear portion of the power transmission case unit 55 and enclosed by a reducer case (not illustrated). The output shaft of the reduction gear mechanism 57 is the rear axle shaft 56. That is, the rotational power of the crankshaft 51 of the internal combustion engine 30 is transmitted to the rear wheels via the belt-type continuously variable transmission and the reduction gear mechanism 57 in the power transmission case unit 55.

A piston 34 reciprocally moving in a cylinder bore 31a of the cylinder block 31 is joined to a crank pin 51a of the crankshaft 51 of the crank case unit 50a via a connecting rod 35. A combustion chamber 36 is formed between a top surface 34a of the piston 34 slidably accommodated in the cylinder bore 31a and a combustion chamber ceiling surface 32a, which faces the top surface 34a, of the cylinder head 32.

In the embodiment, the internal combustion engine 30 adopts an SOHC two-valve system and the cylinder head 32 is provided with a valve operating mechanism 9. The cylinder head cover 33 is superimposed on the cylinder head 32 so as to cover the valve operating mechanism 9.

In order to transmit power to the valve operating mechanism 9, an endless cam chain (not illustrated) is stretched across a cam shaft 91 and the crankshaft 51 through the crank case unit 50a, the cylinder block 31, and a cam chain chamber (not illustrated) provided on one side of the cylinder head 32 close to the crankshaft 51. The cam shaft 91 rotates in synchronization with the crankshaft 51 at half the rotational speed of the crankshaft 51. In the cylinder head 32, an ignition plug (not illustrated) is inserted into the combustion chamber 36 from the opposite side (the other side away from the crankshaft 51) to the cam chain chamber.

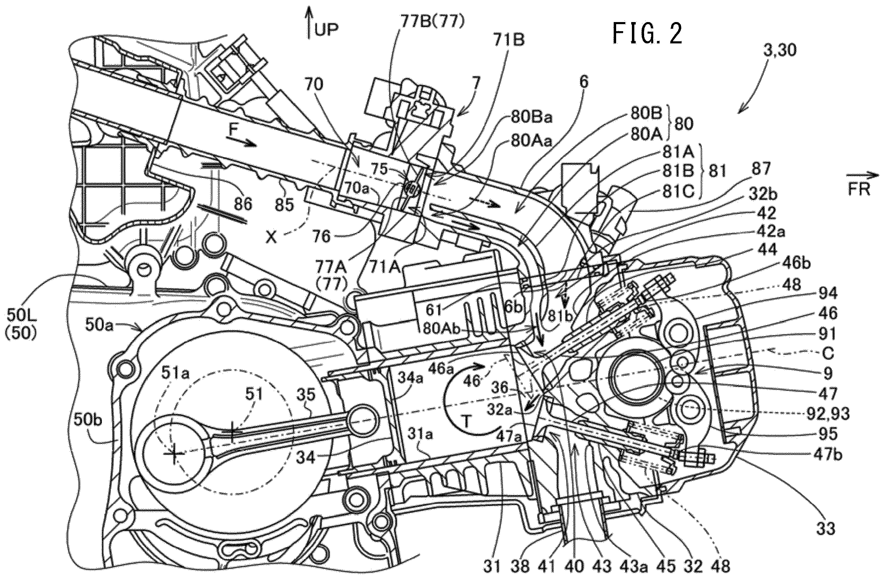

As illustrated in FIG. 1 and FIG. 2, which is an enlarged view of the main part of FIG. 1, the cylinder head 32 is inclined forward greatly so that a cylinder axis line C comes close to a horizontal direction. In this cylinder head 32, an intake port 42 and an exhaust port 43 respectively extend from an intake valve opening 40 and an exhaust valve opening 41 opened in the combustion chamber ceiling surface 32a while being curved so as to separate from each other vertically.

The upstream end of the intake port 42 is opened toward above the cylinder head 32 and connected to the inlet pipe 6 to form a continuous intake passage 80, and the throttle body 7 is connected to the upstream side of the inlet pipe 6. In contrast, the downstream end of the exhaust port 43 is opened toward below the cylinder head 32 and connected to the exhaust pipe 38.

A cylindrical intake valve guide 44 is integrally fitted to a curved outer wall portion 42a (intake valve surrounding portion) of the intake port 42 of the cylinder head 32. In addition, an intake valve 46 is slidably supported by the intake valve guide 44 and the intake valve 46 opens and closes the intake valve opening 40, which faces the combustion chamber 36, of the intake port 42.

An exhaust valve guide 45 is integrally fitted to a curved outer wall portion 43a of the exhaust port 43 of the cylinder head 32. An exhaust valve 47 slidably supported by the exhaust valve guide 45 opens and closes the exhaust valve opening 41, which faces the combustion chamber 36, of the exhaust port 43.

An umbrella portion 46a of the intake valve 46 and an umbrella portion 47a of the exhaust valve 47 are biased upward by valve springs 48 so as to respectively close the intake valve opening 40 and the exhaust valve opening 41 that face the combustion chamber 36. Meanwhile, an intake rocker arm 94 and an exhaust rocker arm 95 that rock when making contact with an intake cam 92 and an exhaust cam 93 of the cam shaft 91 are jointed to the ends of the intake valve 46 and the exhaust valve 47, respectively. When the intake rocker arm 94 and the exhaust rocker arm 95 rock, stem ends 46b and 47b are depressed at predetermined timings to open the intake valve 46 and the exhaust valve 47, respectively. As a result, the intake port 42 communicates with the combustion chamber 36 or the exhaust port 43 communicates with the combustion chamber 36 to take in or exhaust air at predetermined timings.

The internal combustion engine 30 has an intake structure that generates a tumble vortex flow T, that is, vertical rotation of an air-fuel mixture in the combustion chamber 36 to obtain more preferable combustion in the combustion chamber 36.

Specifically, the inlet pipe 6 is connected to the upstream end of the intake port 42 of the internal combustion engine 30 via an insulator 61 to form the continuous intake passage 80 with a substantially circular cross section, and the throttle body 7 is connected to the upstream side of the inlet pipe 6.

The throttle body 7 has an intake path 70 with a substantially circular cross section that forms a part of the intake passage 80 continuous to the combustion chamber 36 of the internal combustion engine 30, and the upstream side thereof is connected to the air cleaner device 86 via the connecting tube 85.

The throttle body 7 has a throttle valve 75. The throttle valve 75 is rotatably supported axially in the throttle body 7 by a throttle valve shaft 76 that perpendicularly intersects with an intake air flow direction F in the intake path 70, that is, perpendicularly intersects with a central axis line X of the intake path 70, and is oriented substantially horizontally. Rotation of the throttle valve 75 variably controls the flow path area of the intake path 70.

The throttle valve 75 is of butterfly type and includes the throttle valve shaft 76 and a discoid valve disc 77 having a one-end-side valve disc 77A and an other-end-side valve disc 77B that are fixed to the throttle valve shaft 76 and rotate integrally with the throttle valve shaft 76. The intake path 70 of the throttle body 7 is oriented substantially horizontally, and a lower end side valve disc is the one-end-side valve disc 77A and an upper end side valve disc is the other-end-side valve disc 77B. Here, the positions of the cylinder head cover 33 and the cylinder block 31 in the direction of the cylinder axis line C are assumed to be the upper position and the lower position, respectively.

The valve disc 77 is biased counterclockwise in FIGS. 1 and 2 by a return spring (not illustrated). When both the one-end-side valve disc 77A and the other-end-side valve disc 77B of the valve disc 77 make contact with an inner surface 70a of the intake path 70, the throttle valve 75 is fully closed. In contrast, the throttle valve 75 is opened when the valve disc 77 is rotated clockwise by a driver's operation or the like and both the one-end-side valve disc 77A and the other-end-side valve disc 77B are thereby separated from the inner surface 70a.

In the intake passage 80, a partitioning portion 81 extending from the inlet pipe 6 to the intake port 42 is provided. The downstream side of the throttle valve 75 in the intake passage 80 is divided by this partitioning portion 81 along the intake air flow direction F. That is, the partitioning portion 81 separates the intake passage 80 into a tumble flow path 80A disposed below so as to cause the intake air having passed therethrough to generate the tumble vortex flow T in the combustion chamber 36 and a main flow path 80B that is disposed above and has a larger cross-sectional area than the tumble flow path 80A.

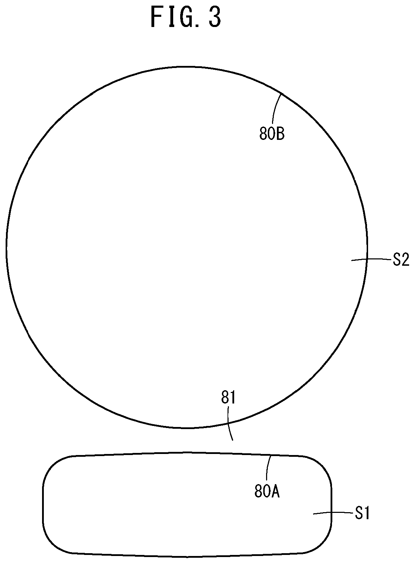

In the embodiment, the lower side of the intake passage 80 divided by the partitioning portion 81 is the tumble flow path 80A and the upper side thereof is the main flow path 80B. FIG. 3 illustrates a cross section of the intake passage 80 visually recognized when taken along a direction intersecting the longitudinal direction. The cross-sectional area of the main flow path 80B in the cross section, that is, an air intake area S2 is set to be larger than a cross-sectional area (air intake area) S1 of the tumble flow path 80A in the same cross section.

The partitioning portion 81 includes an inlet pipe side partitioning portion 81A, an insulator side partitioning portion 81B, and an intake port side partitioning portion 81C, which are continuous from the upstream side to the downstream side of the intake air flow.

The surface of the partitioning portion 81 in the width direction of the intake passage 80 is parallel with the throttle valve shaft 76. An entrance opening 80Aa of the tumble flow path 80A on the inlet pipe 6 side is opened near the downstream side of the one-end-side valve disc 77A of the throttle valve 75 and an entrance opening 80Ba of the main flow path 80B is opened near the downstream side of the other-end-side valve disc 77B of the throttle valve 75.

As illustrated in FIG. 2, a downstream side end portion 81b, which is positioned in the intake port 42, of the partitioning portion 81 is bent toward the cylinder block 31 side.

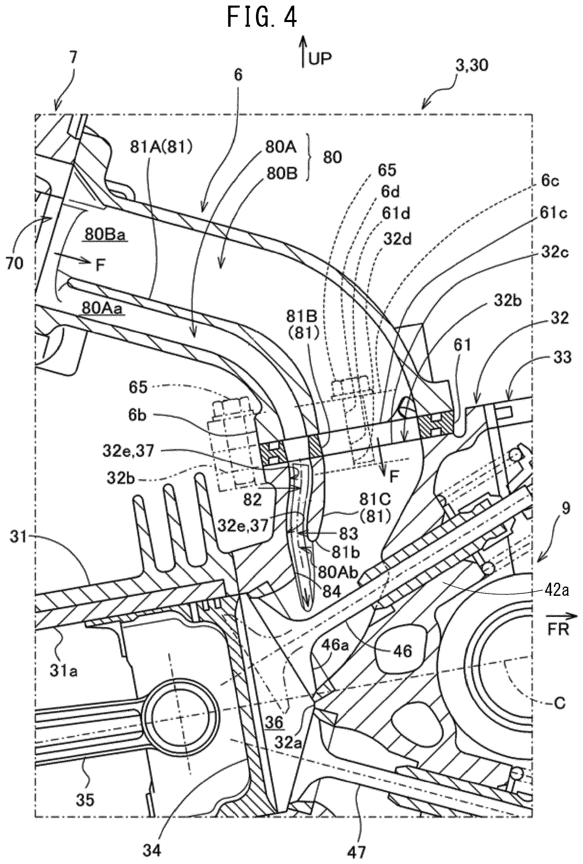

In addition, as illustrated in FIG. 4, which illustrates details of a part of FIG. 2, the tumble flow path 80A is formed in an S-shape by including a first curved portion 82 curved so as to separate from the main flow path 80B or the combustion chamber 36 in the direction of the cylinder axis line C, and a second curved portion 83 curved toward the main flow path 80B side or the combustion chamber 36 side. The downstream end 80Ab of the tumble flow path 80A is formed so as to be directed to the combustion chamber ceiling surface 32a of the cylinder head 32 by the first curved portion 82 and the second curved portion 83. As described later, this causes the tumble vortex flow T to be easily generated in the combustion chamber 36.

That is, in the embodiment, the downstream side end portion 81b of the partitioning portion 81 (intake port side partitioning portion 81C) is bent toward the cylinder block 31 side and the downstream end 80Ab of the tumble flow path 80A is formed in an S-shape. As a result, the freedom degrees of the passage shape and the disposition of the tumble flow path 80A are improved and the downstream end 80Ab of the tumble flow path 80A can be directed to the combustion chamber ceiling surface 32a without significantly changing the cross-sectional areas of the tumble flow path 80A and the main flow path 80B.

The thickness of the partitioning portion 81 is different between the upstream side and the downstream side in the intake air flow direction F. Specifically, the thickness is larger in the curved portion on the upstream side and smaller on the downstream side (the combustion chamber 36 side) thereof. In addition, on a further downstream side, the thickness is gradually increased toward the downstream side.

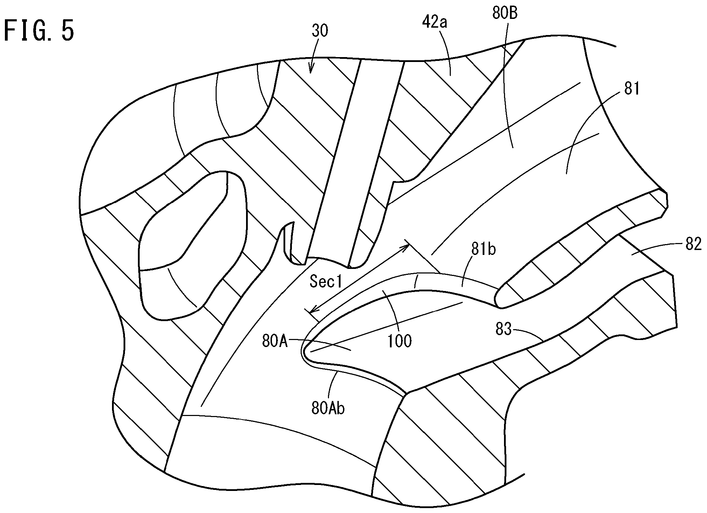

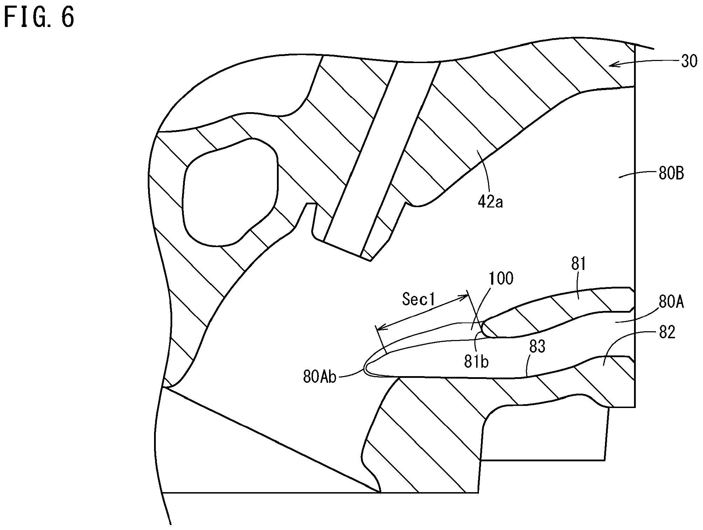

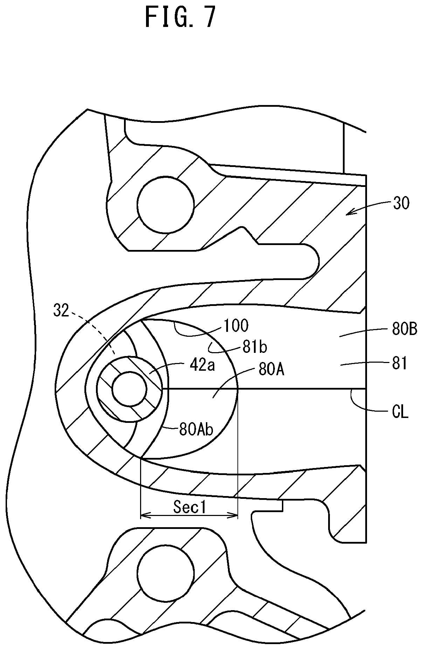

As illustrated in FIG. 5, which enlarges a perspective cross section of the main part, and FIGS. 6 and 7, which are a side view and a plan view passing through a central axis line CL of the intake passage 80, the downstream end 80Ab of the tumble flow path 80A is positioned on the downstream side of the downstream side end portion 81b of the partitioning portion 81 in the intake air flow direction F, at the downstream end of the intake passage 80. A guide surface (guide portion 100) extends from the center in the width direction of the downstream side end portion 81b of the partitioning portion 81 toward the outside of the intake passage 80 in the width direction. Accordingly, the guide portion 100 is positioned on the downstream side, in the intake air flow direction F, of the center in the width direction of the downstream side end portion 81b of the partitioning portion 81.

In this case, the guide portion 100 gradually extends from the center in the width direction of the downstream side end portion 81b of the partitioning portion 81 toward the outside of the intake passage 80 as approaching the downstream side. Therefore, the guide portion 100 has a substantially U-shape. The front end of this U-shape is positioned on the upstream side of the downstream end 80Ab of the tumble flow path 80A, that is, the downstream end 80Ab (exit) of the tumble flow path 80A.

That is, the guide portion 100 is a surface within a range indicated as a section Sec1 in FIGS. 5 to 7. As is clear from the description above, the guide portion 100 is a surface included in a range between the downstream side end portion 81b of the partitioning portion 81 and the downstream end 80Ab of the tumble flow path 80A.

A fuel injection valve 87 is attached to the intake passage 80 including the tumble flow path 80A, the main flow path 80B, and the guide portion 100 described above. The fuel injection valve 87 is inserted externally from above the main flow path 80B of the inlet pipe 6 and is disposed so as to inject and supply fuel toward the intake valve opening 40. That is, the fuel injection valve 87 is disposed close to the main flow path 80B and separated from the tumble flow path 80A by the partitioning portion 81.

The cylinder head 32 has, at the upstream end of the intake port 42, a connection surface 32b to which the inlet pipe 6 is connected. A connection portion 6b of the inlet pipe 6 is connected and fastened to this connection surface 32b via the insulator 61. The intake passage 80 in the connection surface 32b is orthogonal to the connection surface 32b.

The insulator 61 is provided with flange portions 32c, 6c, and 61c for fastening. The flange portions 32c, 6c, and 61c are provided with screw portions 32d, 6d, and 61d that sandwich the intake passage 80 between the left side and the right side, and by screwing fastening members 65 into these screw portions 32d, 6d, and 61d, the inlet pipe 6 is fastened and joined to the cylinder head 32 via the insulator 61.

The cylinder head 32 according to the embodiment is configured basically as described above and the operation and effect thereof will be described below.

When a motorcycle is driven, an air-fuel mixture is taken into the combustion chamber 36 of the internal combustion engine 30. The internal combustion engine 30 compresses and burns the air-fuel mixture to obtain a driving force for traveling the motorcycle. Air (intake air) for this purpose passes through the intake passage 80.

When the internal combustion engine 30 is lightly loaded, the throttle valve 75 is slightly open to guide the intake air to the tumble flow path 80A. In contrast, when the internal combustion engine 30 is heavily loaded, the intake air can be guided to the tumble flow path 80A and the main flow path 80B according to the opening (throttle opening) of the throttle valve 75 without any difficulty.

The "slightly open" position ranges from the fully closed position of the throttle valve 75 to a predetermined opening for operating the internal combustion engine 30 under a light load and the predetermined opening indicates, for example, a throttle opening of 30%. However, the predetermined opening may be set to any value according to the characteristics needed for the internal combustion engine 30 under a light load and not particularly limited to 30%.

When the throttle valve 75 reaches the slightly open position from the fully closed position, the intake air passes, from the upstream side of the intake path 70, through a gap (referred to below as an "acute angle side gap") 71A formed between the one-end-side valve disc 77A and the inner surface 70a of the intake path 70 and a gap (referred to below as an "obtuse angle side gap") 71B formed between the other-end-side valve disc 77B and the inner surface 70a of the intake path 70 and flows to the intake passage 80 from the downstream side of the intake path 70.

The intake air having passed through the acute angle side gap 71A flows into the tumble flow path 80A disposed on the downstream side of the one-end-side valve disc 77A of the throttle valve 75, as a strong converging flow. In contrast, the intake air having passed through the obtuse angle side gap 71B spreads out as a flow diverging in a wide negative pressure range in the main flow path 80B disposed on the downstream side of the other-end-side valve disc 77B of the throttle valve 75 and a part of the intake air flows back and is merged with the converging flow having passed through the acute angle side gap 71A. That is, the intake air is guided to the tumble flow path 80A. As described above, the intake air flows unevenly in the tumble flow path 80A.

The thickness of the partitioning portion 81 (inlet pipe side partitioning portion 81A) for forming the tumble flow path 80A changes from the upstream side to the downstream side in the intake air flow direction F. In the embodiment, although the inlet pipe 6 is curved and extends from the connection portion 6b connecting to the cylinder head 32 toward the rear of the vehicle and the intake passage 80 is curved, since the thickness of the partitioning portion 81 changes, the ratio between the cross-sectional areas of the tumble flow path 80A and the main flow path 80B can be easily set to any value.

In addition, in the tumble flow path 80A, a plurality of bent portions 37 having different curvatures are provided on a cylinder head side inner wall portion 32e. This improves the freedom degree of the passage shape of the tumble flow path 80A.

The downstream end 80Ab of the tumble flow path 80A is positioned on the downstream side of the downstream side end portion 81b of the partitioning portion 81 in the intake air flow direction F (see FIGS. 5 and 6). Therefore, the intake air passing through the tumble flow path 80A is easily guided to a portion between a part (close to the exhaust valve 47) of the back surface of the umbrella portion 46a of the intake valve 46 and the ceiling surface 32a of the combustion chamber 36. As described above, since the downstream end 80Ab of the tumble flow path 80A is positioned on the downstream side of the downstream side end portion 81b of the partitioning portion 81 in the embodiment, the intake air passing through the tumble flow path 80A can be easily guided to a predetermined position in the combustion chamber 36.

In addition, the downstream end 80Ab of the tumble flow path 80A in the cylinder head 32 is provided with an end edge flow path wall 84 to keep the state in which the downstream end 80Ab is directed to the combustion chamber ceiling surface 32a to the end edge, and is merged with the main flow path 80B in an open state.

Accordingly, even when the opening of the downstream end 80Ab of the tumble flow path 80A is expanded, the intake air is prevented from being diffused to the entire back portion of the umbrella portion 46a of the intake valve 46. That is, the guiding of the intake air to the portion between the part (close to the exhaust valve 47) of the back surface of the umbrella portion 46a of the intake valve 46 and the combustion chamber ceiling surface 32a is enhanced.

In addition, as described above, the downstream end 80Ab of the tumble flow path 80A is directed to the ceiling surface 32a of the combustion chamber 36 and the partitioning portion 81 is curved toward the combustion chamber 36 side in the intake passage 80. In addition, in the vicinity of the downstream end 80Ab of the tumble flow path 80A, the first curved portion 82 curved so as to separate from the main flow path 80B or the combustion chamber 36 and the second curved portion 83 curved toward the main flow path 80B side or the combustion chamber 36 side are provided. The vicinity of the downstream end 80Ab of the tumble flow path 80A is curved like an S-shape due to the first curved portion 82 and the second curved portion 83.

The intake air having passed through the tumble flow path 80A with the above shape is introduced to the combustion chamber 36 while rising slightly. That is, the intake air is directed to the ceiling surface 32a in the combustion chamber 36. As described above, in the embodiment, the partitioning portion 81 is curved toward the combustion chamber 36 side and the downstream end 80Ab of the tumble flow path 80A formed in an S-shape, whereby the freedom degree of the shape of the tumble flow path 80A can be improved and the downstream end 80Ab of the tumble flow path 80A can be directed to the combustion chamber 36 without significantly changing the ratio between the cross-sectional areas of the tumble flow path 80A and the main flow path 80B.

This enhances the tumble vortex flow T in the combustion chamber 36. That is, as indicated by the arrow in FIG. 4, the intake air flowing through the tumble flow path 80A can be flowed into the cylinder bore 31a from the portion between the back surface of the umbrella portion 46a of the intake valve 46 close to the exhaust valve 47 and the combustion chamber ceiling surface 32a after being passed above the umbrella portion 46a of the intake valve 46. As a result, the tumble vortex flow T is easily generated in the combustion chamber 36.

In this way, the intake air is supplied to the combustion chamber 36 and fuel is injected from the fuel injection valve 87. As described above, the fuel injection valve 87 is provided closer to the main flow path 80B having a larger air intake area than the tumble flow path 80A. Therefore, the separation distance between the fuel injection valve 87 and the partitioning portion 81 is larger than the separation distance when the fuel injection valve 87 is disposed closer to the tumble flow path 80A. Accordingly, the fuel injected from the fuel injection valve 87 is prevented from being blocked by the partitioning portion 81. That is, the fuel is easily supplied to the combustion chamber 36. Of course, this is also true when the internal combustion engine 30 is heavily loaded, which will be described later.

When the accelerator opening of the throttle valve 75 exceeds the slightly open position, the intake air also passes through the main flow path 80B. That is, the intake air is distributed to both the tumble flow path 80A and the main flow path 80B. In the location in the main flow path 80B in which the fuel injection valve 87 is provided, the fuel injection valve 87 partially blocks the main flow path 80B, and the air intake area of the main flow path 80B is therefore reduced. In the embodiment, however, the air intake area of the main flow path 80B is set to be larger than the air intake area of the tumble flow path 80A. Therefore, when, for example, the throttle valve 75 is fully open, the intake air of the required flow rate can be supplied to the combustion chamber 36.

Here, the guide portion 100 is provided in the section Sec1 between the downstream side end portion 81b of the partitioning portion 81 and the downstream end 80Ab of the tumble flow path 80A. The intake air having passed through the main flow path 80B is guided to the vicinity of the combustion chamber 36 by the guide portion 100.

In addition, in this case, the guide portion 100 is formed of a substantially U-shaped surface that gradually extends from the downstream side end portion 81b of the partitioning portion 81 toward the outside of the intake passage 80 as approaching the downstream side. In addition, the guide portion 100 is provided on the upstream side of the downstream end 80Ab of the tumble flow path 80A. This suppresses interference with the air having passed through the tumble flow path 80A by the guide portion 100.

For the reasons described above, the intake air having passed through the tumble flow path 80A and the intake air having passed through the main flow path 80B are prevented from being merged with each other before reaching the vicinity of the combustion chamber 36. In other words, a collision between the intake air having passed through the main flow path 80B and the intake air having passed through the tumble flow path 80A in the vicinity of the downstream end 80Ab (exit) of the tumble flow path 80A can be suppressed. Accordingly, even when the internal combustion engine 30 needs to be heavily loaded, for example, when the throttle valve 75 is fully open, the intake air having passed through the tumble flow path 80A and the intake air having passed through the main flow path 80B are introduced onto the combustion chamber ceiling surface 32a and the tumble vortex flow T is generated.

That is, according to the embodiment, the tumble vortex flow T can be easily generated in the combustion chamber 36 when the internal combustion engine 30 is lightly loaded and also when the internal combustion engine 30 is heavily loaded. Since fast combustion occurs in the combustion chamber 36 of the internal combustion engine 30 in the power unit 3 having the cylinder head 32 provided with the intake structure described above, fuel economy characteristics and the like are expected to improve.

The present invention is not limited to the embodiment described above and various modifications may be made without departing from the concept of the present invention.

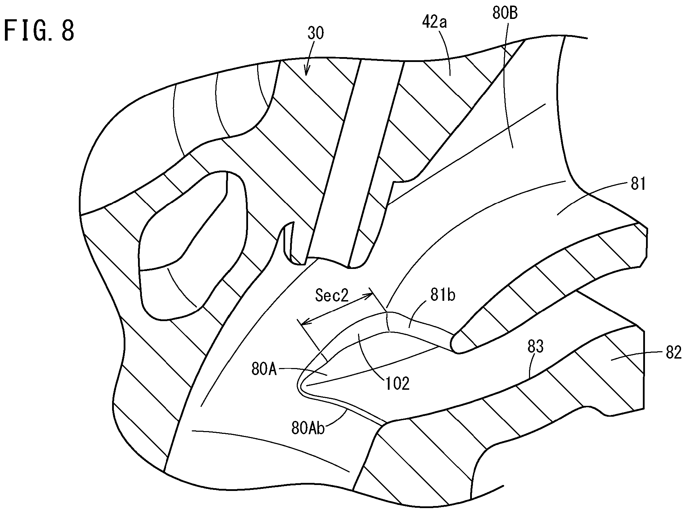

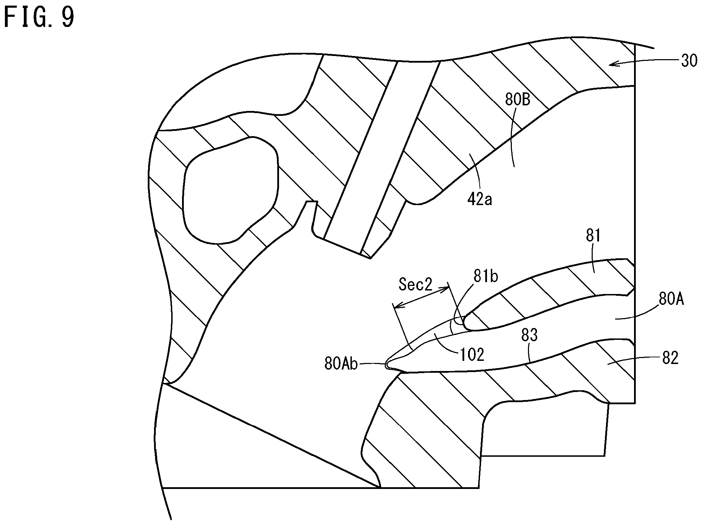

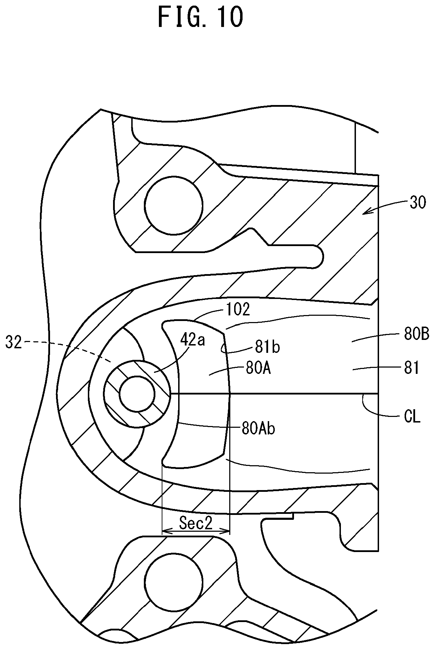

For example, as illustrated in FIGS. 8 to 10 as a section Sec2, a surface having a substantially angular U-shape may be used as a guide portion 102. The guide portion 100 has a substantially U-shape that gently extends to the downstream side end portion 81b of the partitioning portion 81, whereas the edge of the guide portion 102 perpendicularly or substantially perpendicularly intersects with the downstream side end portion 81b of the partitioning portion 81.

In addition, the first curved portion 82 and the second curved portion 83 may be formed in the tumble flow path 80A as long as these curved portions are close to the downstream end 80Ab. That is, for example, a short straight portion may be formed on the downstream side of the second curved portion 83.

### Reference Signs List

- 3: power unit
- 6: inlet pipe
- 7: throttle body
- 30: internal combustion engine
- 31: cylinder block
- 32: cylinder head
- 32a: combustion chamber ceiling surface
- 37: bent portion
- 40: intake valve opening
- 42: intake port
- 46: intake valve
- 47: exhaust valve
- 75: throttle valve
- 76: throttle valve shaft
- 80: intake passage
- 80A: tumble flow path
- 80B: main flow path
- 81: partitioning portion
- 82: first curved portion
- 83: second curved portion
- 100, 102: guide portion

## Claims

1. An intake structure of an internal combustion engine (30) in which a partitioning portion (81) is provided in an intake passage (80) along an intake air flow direction (F) and the intake passage (80) is divided into a tumble flow path (80A) and a main flow path (80B) by the partitioning portion (81),
a downstream end (80Ab) of the tumble flow path (80A) is directed to a ceiling surface (32a) of a combustion chamber (36) **characterized in that** a guide portion (100 or 102) is provided, the guide portion (100 or 102) extending from a center of a downstream side end portion (81b) of the partitioning portion (81) toward an outside of the intake passage (80) in a width direction, being a direction perpendicular to the intake air flow direction (F), and having a front end positioned on a downstream side of the downstream side end portion (81b) of the partitioning portion (81) in the intake air flow direction (F), an upstream side end portion of the guide portion (100 or 102) is continuous to the downstream side end portion (81b) of the partitioning portion (81),
the guide portion (100 or 102) gradually extends from the center of the downstream side end portion (81b) of the partitioning portion (81) toward the outside of the intake passage (80) as approaching the downstream side in plan view passing through a central axis line (CL) of the intake passage (80),
a downstream side end portion of the guide portion (100 or 102) is continuous to the downstream end (80Ab) of the tumble flow path (80A), and
an opening formed by the downstream side end portion (81b) of the partitioning portion (81), the guide portion (100 or 102), and the downstream end (80Ab) of the tumble flow path (80A) has a smaller width than the main flow path (80B).

2. The intake structure according to claim 1, wherein
the downstream end (80Ab) of the tumble flow path (80A) is positioned on the downstream side of the downstream side end portion (81b) of the partitioning portion (81) in the intake air flow direction (F), and
the guide portion (100 or 102) is provided on an upstream side of the downstream end (80Ab) of the tumble flow path (80A) in the intake air flow direction (F).

3. The intake structure according to claim 1 or 2, wherein
the main flow path (80B) has a larger cross-sectional area than the tumble flow path (80A), and a fuel injection valve (87) is disposed close to the main flow path (80B).

4. The intake structure according to any one of claims 1 to 3, wherein
the guide portion (100 or 102) has a substantially U-shape.

5. The intake structure according to any one of claims 1 to 4, wherein
the guide portion (100 or 102) has a continuous circular arc shape in plan view passing through the intake passage (80).

## Patentansprüche

1. Ansaugstruktur eines Verbrennungsmotors (30), in der ein Unterteilungsbereich (81) in einem Ansaugkanal (80) entlang einer Ansaugluft-Strömungsrichtung (F) vorgesehen ist, und der Ansaugkanal (80) in einen Abwärtsströmungspfad (80A) und einen Hauptströmungspfad (80B) durch den Unterteilungsbereich (81) unterteilt ist,
ein nachgelagertes Ende (80Ab) des Abwärtsströmungspfads (80A) zu einer Deckenfläche (32a) der Verbrennungskammer (36) ausgerichtet ist, **dadurch gekennzeichnet, dass**
ein Führungsbereich (100 oder 102) vorgesehen ist, wobei der Führungsbereich (100 oder 102) von einer Mitte eines Endbereichs (81b) an der nachgelagerten Seite des Unterteilungsbereichs (81) zu einer Außenseite des Ansaugkanals (80) in einer Breitenrichtung verläuft, die eine Richtung ist, die senkrecht zu der Ansaugluft-Strömungsrichtung (F) ist und ein vorderes Ende hat, das an einer nachgelagerten Seite des Endbereichs (81b) an der nachgelagerten Seite des Unterteilungsbereichs (81) in der Ansaugluft-Strömungsrichtung (F) angeordnet ist, ein Endbereich an der vorgelagerten Seite des Führungsbereichs (100 oder 102) zum Endbereich (81b) an der nachgelagerten Seite des Unterteilungsbereichs (81) fortlaufend ist,
der Führungsbereich (100 oder 102) in einer Draufsicht durch eine Mittelachsenlinie (CL) des Ansaugkanals (80) hindurchgehend fortscheitend von der Mitte des Endbereichs (81b) an der nachgelagerten Seite des Unterteilungsbereichs (81) zur Außenseite des Ansaugkanals (80) bei der Annäherung an die nachgelagerte Seite verläuft,
ein Endbereich an der nachgelagerten Seite des Führungsbereichs (100 oder 102) zum nachgelagerten Ende (80ab) des Abwärtsströmungspfads (80A) fortlaufend ist, und
eine Öffnung, die durch den Endbereich (81b) an der nachgelagerten Seite des Unterteilungsbereichs (81), den Führungsbereich (100 oder 102) und das nachgelagerte Ende (80Ab) des Abwärtsströmungspfads (80A) ausgebildet ist, eine kleinere Breite als der Hauptströmungspfad (80B) hat.

2. Ansaugstruktur nach Anspruch 1, wobei
das nachgelagerte Ende (80Ab) des Abwärtsströmungspfads (80A) an der nachgelagerten Seite des Endbereichs (81b) an der nachgelagerten Seite des Unterteilungsbereichs (81) in der Ansaugluft-Strömungsrichtung (F) angeordnet ist, und
der Führungsbereich (100 oder 102) an einer vorgelagerten Seite des nachgelagerten Endes (80Ab) des Abwärtsströmungspfads (80A) in der Ansaugluft-Strömungsrichtung (F) vorgesehen ist.

3. Ansaugstruktur nach Anspruch 1 oder 2, wobei
der Hauptströmungspfad (80B) eine größere Querschnittsfläche hat als der Abwärtsströmungspfad (80A), und ein Treibstoffeinspritzventil (87) nahe dem Hauptströmungspfad (80B) angeordnet ist.

4. Ansaugstruktur nach einem der Ansprüche 1 bis 3, wobei:
der Führungsbereich (100 oder 102) eine im Wesentlichen U-Form hat.

5. Ansaugstruktur nach einem der Ansprüche 1 bis 4, wobei:
der Führungsbereich (100 oder 102) in der Draufsicht eine durchgängige kreisförmige Bogenform hat, die durch den Ansaugkanal (80) hindurchgeht.

## Revendications

1. Structure d'admission d'un moteur à combustion interne (30) dans laquelle une partie de séparation (81) est prévue dans un passage d'admission (80) le long d'une direction d'écoulement d'air d'admission (F) et le passage d'admission (80) est divisé en un trajet d'écoulement tourbillonnant (80A) et un trajet d'écoulement principal (80B) par la partie de séparation (81),
une extrémité aval (80Ab) du trajet d'écoulement tourbillonnant (80A) est dirigée vers une surface de plafond (32a) d'une chambre de combustion (36), **caractérisée en ce que**
une partie de guidage (100 ou 102) est prévue, la partie de guidage (100 ou 102) s'étendant depuis un centre d'une partie d'extrémité côté aval (81b) de la partie de séparation (81) vers un extérieur du passage d'admission (80) dans une direction de largeur, étant une direction perpendiculaire à la direction d'écoulement d'air d'admission (F), et présentant une extrémité avant positionnée sur un côté aval de la partie d'extrémité côté aval (81b) de la partie de séparation (81) dans la direction d'écoulement d'air d'admission (F), une partie d'extrémité côté amont de la partie de guidage (100 ou 102) est continue par rapport à la partie d'extrémité côté aval (81b) de la partie de séparation (81),
la partie de guidage (100 ou 102) s'étend progressivement depuis le centre de la partie d'extrémité côté aval (81b) de la partie de séparation (81) vers l'extérieur du passage d'admission (80) à l'approche du côté aval dans une vue en plan passant à travers une ligne axiale centrale (CL) du passage d'admission (80),
une partie d'extrémité côté aval de la partie de guidage (100 ou 102) est continue par rapport à l'extrémité aval (80Ab) du trajet d'écoulement tourbillonnant (80A), et
une ouverture formée par la partie d'extrémité côté aval (81b) de la partie de séparation (81), la partie de guidage (100 ou 102), et l'extrémité aval (80Ab) du trajet d'écoulement tourbillonnant (80A) présente une largeur plus petite que le trajet d'écoulement principal (80B).

2. Structure d'admission selon la revendication 1, dans laquelle
l'extrémité aval (80Ab) du trajet d'écoulement tourbillonnant (80A) est positionnée sur le côté aval de la partie d'extrémité côté aval (81b) de la partie de séparation (81) dans la direction d'écoulement d'air d'admission (F), et
la partie de guidage (100 ou 102) est prévue sur un côté amont de l'extrémité aval (80Ab) du trajet d'écoulement tourbillonnant (80A) dans la direction d'écoulement d'air d'admission (F).

3. Structure d'admission selon la revendication 1 ou 2, dans laquelle
le trajet d'écoulement principal (80B) présente une superficie de section transversale plus grande que le trajet d'écoulement tourbillonnant (80A), et une soupape d'injection de carburant (87) est disposée à proximité du trajet d'écoulement principal (80B).

4. Structure d'admission selon l'une quelconque des revendications 1 à 3, dans laquelle
la partie de guidage (100 ou 102) présente une forme sensiblement en U.

5. Structure d'admission selon l'une quelconque des revendications 1 à 4, dans laquelle
la partie de guidage (100 ou 102) présente une forme d'arc circulaire continue en vue en plan passant à travers le passage d'admission (80).
